# EUROPEAN PATENT SPECIFICATION

(11) **EP 0 662 863 B1**
(45) Date of publication and mention of the grant of the patent: **14.04.1999**
(21) Application number: 94924478.4
(22) Date of filing: 20.07.1994
(51) Int. Cl.: B01J 29/08, B01J 29/10

(54) **PROCESS FOR PREPARING HIGHLY METAL EXCHANGED ZEOLITE Y**
VERFAHREN ZUR HERSTELLUNG EINES STARK MIT METALL AUSGEWECHSELTEN ZEOLITHS Y
PROCEDE DE PREPARATION DE ZEOLITE Y A FORT ECHANGE D'IONS METALLIQUES

(30) Priority: 22.07.1993 US 94734
(43) Date of publication of application: 19.07.1995
(73) Proprietor: PQ Corporation, Valley Forge, PA 19482 (US)
(72) Inventor: COOPER, David, A., Morrisville, PA 19067 (US)
(74) Representative: Weisert, Annekäte, Dipl.-Ing. Dr.-Ing.
(86) International application number: US9408174
(87) International publication number: WO9503122

(56) References cited:
- EP-A- 0 348 001
- WO-A-92/09546
- US-A- 3 677 698
- US-A- 3 969 276
- US-A- 4 388 224

## Description

### BACKGROUND OF THE INVENTION

This invention relates to the ion exchange of zeolite Y and provides a process for preparing zeolites with high polyvalent metal content but extremely low alkali metal content. In particular, the process involves ion exchange of zeolite NaY to a potassium enriched form of the zeolite. A subsequent ion exchange with a solution containing one or more polyvalent metals provides the substituted zeolite Y with the extremely low alkali metal content.

Zeolite Y (a crystalline aluminosilicate of a particular composition and structure) contains a significant amount of sodium. Many applications require the removal of said sodium with the substitution of polyvalent metal ions. Zeolite Y has a structure that renders the removal of virtually all the sodium from the zeolite very difficult. Sherry [*J. Phys. Chem*. 72, 12, 4086-4094 (1968) and *J. Colloid & Interface Science* 28, 2, 288-292 (1968)] developed isotherms that showed that Ca⁺² and La⁺³ exchange for sodium in zeolite NaY in excess of 70% substitution was not possible. Sherry and Schwartz (U.S. Patent 3,677,698) describe a low temperature-high temperature ion exchange process that provides metal exchanged zeolite that has a low level of its original metal, sodium. The low-temperature exchange is carried out at a temperature of 50 to 215°F while the high temperature exchange is carried out at 300 to 600°F. Polyvalent ions such as the rare earths can be used with zeolites of the faujasite type structure. The resulting original metal contents are between 0.5 and 1% Na₂O.

It is an object of this invention to provide an ion exchange process that provides a polyvalent metal substituted zeolite Y that contains less than 0.5% Na₂O and does not require high temperatures or long contact times.

### SUMMARY OF THE INVENTION

I have found that zeolite Y with high polyvalent ion content and very low alkali metal content can be prepared by a process that includes an initial potassium ion exchange followed by an exchange with a solution containing polyvalent metal ion. The starting zeolite NaY which contains sodium (usually 11% or more as Na₂O) is contacted with a potassium salt solution under conditions that provide that a substantial proportion of the zeolite sodium is replaced by potassium. Surprisingly, the zeolite Y can now be contacted with a salt solution of a polyvalent metal with nearly complete removal of the alkali metal.

The ion exchange conditions to achieve this high displacement of alkali metal from the zeolite are quite mild. In effect, the number of contacts, the concentration of the polyvalent metal salt solution, and the temperature of contact are significantly less than required to prepare substituted zeolite Y by methods that do not use a preliminary potassium exchange such as the method described by Sherry, et al. in U.S. Patent 3,677,698. The high polyvalent metal ion substituted zeolite Y resulting from my process is surprising in view of the Sherry references, as will be demonstrated in the examples.

Processes wherein X or Y zeolite is ion-exchanged with a solution of a potassium salt then a solution of a barium salt, are disclosed in US-A-3 969 276

### THE INVENTION

The zeolite treated by the process of my invention is a faujasite-type material designated as zeolite Y. Such materials are prepared by the hydrothermal treatment of sources of SiO₂, Al₂O₃ and Na₂O as described in numerous U.S. Patents including 3,130,007.

The zeolites produced by the processes disclosed in this patent are represented by the following formula:

0.9 ±0.2 Na₂O:Al₂O₃:X SiO₂:Y H₂O

wherein X can be about 3 to 6 and Y can be 0 to 9 and have the faujasite structure. Zeolite Y with a SiO₂/Al₂O₃ ratio of 6 contains about 11% Na₂O. Zeolites with lower SiO₂/Al₂O₃ ratios contain more sodium. These materials are articles of commerce and are available as powders and agglomerates.

The zeolite is contacted with a potassium salt solution using conditions that produce zeolites wherein at least 90% of the sodium for zeolite Y is replaced with potassium. The contacting solution can contain one or more potassium salts of strong acids. These can include among others KCl, K₂SO₄, KNO₃. The concentration can be 1 to 10 normal. The contact time can be 0.5 to 5 hours. The temperature is below boiling, but is usually above room temperature. The number of contacts can be varied, but not more than 5 are needed. Usually 1, 2 or 3 contacts are all that are required. After contact or between contacts the zeolite is filtered and washed.

The zeolite NaY need not be completely converted to the potassium form as only about 90% of the sodium must be removed to allow for an easier exchange to the polyvalent form. The level of potassium exchange can be higher. To obtain the potassium content required, the starting zeolite should be contacted with up to 10 moles of potassium ion for each mole of sodium to be exchanged.

The predominately potassium substituted zeolite Y is now contacted with a solution containing one or more polyvalent metal salts. Nearly any polyvalent metal can be ion exchanged into the zeolite. These include the polyvalent metals or metalloids of group 1b, 2a, 2b, 3a, 3b, 4a, 4b, 5b, 6b and 7b of the periodic table. Calcium and the rare earths, among others, are often used. The polyvalent metal salts are usually those of strong acids such as chlorides, sulfates and nitrates. The concentration of the solution can be 0.1 to 10 normal and is usually considerably less than 10 normal. The contact time can vary considerably, but is usually 0.5 to 24 hours. The temperature of the exchange is less than 100°C. Several contacts can be used, but I prefer 2 or 3 counter-current contacts for efficient use of the incoming ion.

By my invention, polyvalent substituted zeolite Y can be prepared with much higher levels of exchange than previously reported.

H. Sherry showed in *J. Phys. Chem.* 72, 12, 4086-4094 (1968) that Ca⁺⁺ exchange to levels greater than 70% was not possible for zeolite NaY. I have found that ∼100% CaY can be prepared by my method.

H. Sherry showed in *J. Colloid and Interface Science* 28, 2, 288-292 (1968) that La⁺³ exchange in zeolite Y of greater than 70% was very difficult unless long contact times were used. I have been able to prepare 90% exchanged LaY by the method of my invention.

### EXAMPLES

The following examples illustrate certain embodiments of my invention. These examples are not provided to establish the scope of the invention, which is described in the disclosure and recited in the claims. The proportions are in parts by weight (pbw), percent by weight, moles, equivalents or milliequivalents (meq).

In the tables summarizing the results, Na₂O/Al₂O₃ represents the equivalents of Na for each equivalent of Al in the zeolite, K₂O/Al₂O₃ represents the equivalents of K for each equivalent of Al, CaO/Al₂O₃ represents the equivalents of Ca for each equivalent of A1, and 1/3 La₂O₃/Al₂O₃ represents the equivalents of La for each equivalent of Al. These representations are in accordance with accepted practice in the zeolite art.

The processes described in the examples were carried out with a starting zeolite NaY with 5.5 moles of Sio₂ for each mole of Al₂O₃. This material (a commercial product) is designated NaY or NaY zeolite. Intermediate products of the potassium ion exchange are designated KY or KY zeolite even though they still contain some sodium. The product of the final exchange is designated CaY or CaY zeolite, LaY or LaY zeolite. Some representations have number subscripts such as Ca₆₀ NaY. These representations mean that 60% of the sodium is replaced with Ca.

### Example 1

NaY zeolite was contacted with various quantities of 1N Ca(NO₃)₂ solution for six hours at 150°C. The ion-exchange contact ratios and residual Ca and Na levels are shown in Table 1.

**TABLE 1**

| | Contact Ratio (meqCa⁺²/gNaY) | | | | |
|---|---|---|---|---|---|
| | 5.6 | 9.9 | 19.8 | 26.2 | 59.3 |
| CaO/Al₂O₃ | 0.56 | 0.59 | 0.66 | 0.72 | 0.76 |
| Na₂O/Al₂O₃ | 0.35 | 0.33 | 0.25 | 0.21 | 0.17 |

### Example 2

Ca₆₀NaY zeolite was prepared by contacting NaY zeolite with 10.5 meq Ca⁺⁺/gm zeolite at 82°C for 2 hrs. The CaNaY zeolite had a CaO/Al₂O₃ of 0.60.

### Example 3

Ca₆₀NaY zeolite from Example 2 was contacted with various quantities of 1N Ca(NO₃)₂ solution at 150°C for 6 hours. The contact ratios and residual Ca and Na levels are shown in Table 2.

**TABLE 2**

| | Contact Ratio (meqCa⁺²/gCaNaY) | | | | | |
|---|---|---|---|---|---|---|
| | 0 | 6.5 | 12.9 | 25.8 | 34.4 | 77.4 |
| CaO/Al₂O₃ | 0.60 | 0.67 | 0.73 | 0.77 | 0.79 | 0.85 |
| Na₂O/Al₂O₃ | 0.32 | 0.23 | 0.19 | 0.14 | 0.12 | 0.09 |

These results show that high temperature contacts (150°C) allow for higher levels of Ca exchange than low temperature contacts. These results should be compared with the isotherms in the Sherry *J. Phys. Chem.* article. However, even with multiple contacts, the highest CaO/Al₂O₃ level attained was 0.85.

### Example 4

KY zeolite was prepared by contacting NaY zeolite (SiO₂/Al₂O = 5.5) with a solution containing 5 pbw of KCl per pbw of NaY zeolite. The contact was at 150°F and lasted 2 hours. The concentration was 2N KCl. After the K⁺ exchange, the zeolite was washed with 5 pbw of hot deionized water (DI). This procedure was repeated 2 more times. The properties after the third contact are shown in Table 3.

**TABLE 3**

| | Starting NaY | KY |
|---|---|---|
| SiO₂/Al₂O₃ | 5.5 | 5.5 |
| Na₂O (% wt/wt) | 13.9 | 0.59 |
| K₂O (% wt/wt) | -- | 17.03 |
| K₂O/Al₂O₃ | -- | 0.95 |
| Na₂O/Al₂O₃ | 1.0 | 0.05 |
| Lattice Parameter (Å) | -- | 24.73 |

### Example 5

KY zeolite prepared as described in Example 4 was contacted with various quantities of 1N Ca(NO₃)₂ solution for 24 hours at 180°F. The ion exchange contact ratios and residual Na, K and Ca levels are shown in Table 4.

**TABLE 4**

| | Contact Ratio (meqCa⁺²/gKY) | | | | |
|---|---|---|---|---|---|
| | 13.1 | 26.2 | 78.6 | 257 | 514 |
| CaO/Al₂O₃ | 0.75 | 0.79 | 0.89 | 0.93 | 0.99 |
| Na₂O/Al₂O₃ | 0.00 | 0.00 | 0.00 | 0.00 | 0.00 |
| K₂O/Al₂O₃ | 0.23 | 0.20 | 0.10 | 0.06 | 0.01 |

These results, when compared with the results in Table 1 and 2, show how the process of my invention allows for the almost complete exchange of Ca⁺⁺ for the alkali cations in zeolite Y without the need for high temperature contacts.

### Example 6

KY zeolite prepared as described in Example 4 was contacted with 0.4N LaCl₃ solution for 24 hours at 180°F. The contact conditions and residual K and La levels are shown in Table 5.

**TABLE 5**

| | Contact Ratio (meqLa⁺³/gKY) | |
|---|---|---|
| | 117 | 234 |
| ¹/₃La₂O₃/Al₂O₃ | 0.79 | 0.90 |
| K₂O/Al₂O₃ | 0.20 | 0.10 |

These results show that the degree of La⁺³ exchange is higher when following my process than when carrying out La⁺³ exchange on NaY. These results should be compared with the isotherms in the Sherry *J. Colloid and Interface Science* article.

## Claims

1. A process for preparing polyvalent metal zeolite Y of extremely low alkali metal content, comprising the steps of:
a. contacting zeolite Y that contains sodium with a solution of a potassium salt under ion exchange conditions that provide exchange of the potassium for sodium and provide a potassium zeolite Y with a residual sodium content of about 0.1 equivalent of Na₂O or less for each equivalent of Al₂O₃;
b. filtering and washing the resulting potassium zeolite Y;
c. contacting said potassium zeolite Y with a solution containing salts of one or more polyvalent metals under ion exchange conditions that the polyvalent metal ions replace potassium and sodium in the zeolite to produce a polyvalent metal zeolite Y that contains less than about 0.2 equivalents of Na₂O + K₂O per equivalent of Al₂O₃; and
d. filtering and washing the resultant product zeolite Y.

2. The process of claim 1 wherein the polyvalent metal ion is from group 1b, 2a, 2b, 3a, 3b, 4a, 4b, 5b, 6b and 7b of the periodic table.

3. The process of claim 1 wherein the polyvalent metal ion is calcium or lanthanum.

4. The process of claim 1 wherein the polyvalent metal ion is a rare earth.

## Patentansprüche

1. Verfahren zur Herstellung eines mehrwertigen Metallzeoliths Y mit extrem niedrigem Alkalimetallgehalt, umfassend die Stufen:
a. Behandlung von Zeolith Y, der Natrium enthält, mit einer Lösung aus einem Kaliumsalz bei Ionenaustauschbedingungen, so daß ein Austausch des Kaliums für Natrium stattfindet und ein Kalium-Zeolith Y mit einem Restnatriumgehalt von etwa 0,1 Åquivalent Na₂O oder weniger für jedes Åquivalent Al₂O₃ erhalten wird;
b. Filtrieren und Waschen des entstehenden Kalium-Zeoliths Y;
c. Behandlung des Kalium-Zeoliths Y mit einer Lösung, enthaltend Salze von einem oder mehreren mehrwertigen Metallen bei Ionenaustauschbedingungen, so daß die mehrwertigen Metallionen das Kalium und Natrium in dem Zeolith ersetzen, unter Bildung eines mehrwertigen Metall-Zeoliths Y, der weniger als etwa 0,2 Åquivalente Na₂O + K₂O pro Åquivalent Al₂O₃) enthält; und
d. Filtration und Waschen des entstehenden Produkts Zeolith Y.

2. Verfahren nach Anspruch 1, dadurch **gekennzeichnet,** daß das mehrwertige Metallion aus der Gruppe 1b, 2a, 2b, 3a, 3b, 4a, 4b, 5b, 6b und 7b des Periodischen Systems ausgewählt werden.

3. Verfahren nach Anspruch 1, dadurch **gekennzeichnet,** daß das mehrwertige Metallion Calcium oder Lanthan ist.

4. Verfahren nach Anspruch 1, dadurch **gekennzeichnet,** daß das mehrwertige Metallion eine Seltene Erde ist.

## Revendications

1. Procédé de préparation d'une zéolite Y échangée par un métal polyvalent ayant une teneur en métal alcalin extrêmement faible, comprenant les étapes de :
a. mise en contact d'une zéolite Y qui contient du sodium avec une solution d'un sel de potassium dans des conditions d'échange d'ions qui fournissent un remplacement du sodium par du potassium et fournissent une zéolite Y échangée par du potassium avec une teneur en sodium résiduel d'environ 0,1 équivalent de Na₂O ou moins pour chaque équivalent de Al₂O₃;
b. filtration et lavage de la zéolite Y échangée par du potassium résultante;
c. mise en contact de cette zéolite Y échangée par du potassium avec une solution contenant des sels d'un ou de plusieurs métaux polyvalents dans des conditions d'échange d'ions telles que les ions de métal polyvalent remplacent le potassium et le sodium dans la zéolite pour produire une zéolite Y contenant un métal polyvalent qui contient moins d'environ 0,2 équivalent de Na₂O + K₂O par équivalent de Al₂O₃ ; et
d. filtration et lavage de la zéolite Y produite résultante.

2. Procédé suivant la revendication 1, dans lequel l'ion métallique polyvalent provient des Groupes 1b, 2a, 2b, 3a, 3b, 4a, 4b, 5b, 6b et 7b du tableau périodique.

3. Procédé suivant la revendication 1, dans lequel l'ion métallique polyvalent est le calcium ou le lanthane.

4. Procédé suivant la revendication 1, dans lequel l'ion métallique polyvalent est une terre rare.
